# FASCICULE DE BREVET EUROPEEN

(11) **EP 0 503 414 B1**
(45) Date de publication et mention de la délivrance du brevet: **22.06.1994**
(21) Numéro de dépôt: 92103527.5
(22) Date de dépôt: 02.03.1992
(51) Int. Cl.: A47G 19/12, A47J 45/06, F16B 4/00

(54) **Récipient verseur d'infusion adapté aux fours à micro-ondes et procédé de fabrication d'un tel récipient**
Aufgusskanne geeignet für Mikrowellenofen und Verfahren zur Herstellung solch einer Kanne
Pouring vessel adapted for microwave ovens and the process for manufacturing such a vessel

(30) Priorité: 04.03.1991 FR 9102531
(43) Date de publication de la demande: 16.09.1992
(73) Titulaire: MOULINEX, F-93170 Bagnolet (FR)
(72) Inventeur: Schiettecatte, Patrice Jean Cornelius, F-61250 Longrai (FR)
(74) Mandataire: May, Hans Ulrich, Dr.

(56) Documents cités:
- GB-A- 2 008 389
- US-A- 4 104 957
- US-A- 4 393 671

## Description

La présente invention se rapporte à un récipient verseur d'infusion adapté à être placé dans un four à micro-ondes et comprenant un corps réalisé dans un matériau transparent aux micro-ondes, et une poignée réalisée dans un matériau transparent aux micro-ondes et fixée au corps par des moyens de fixation transparents aux micro-ondes.

D'après le document GB-A-2 008 389, on connaît un récipient de ce type dont le corps est en verre et dont les moyens de fixation comportent un anneau de cerclage réalisé en une matière plastique transparente aux micro-ondes, telle que le polycarbonate. Toutefois, en utilisant un tel plastique, on constate que dans certaines conditions, l'échauffement du corps provoque un ramollissement du plastique, si bien qu'au bout d'un certain nombre de cycles thermiques une déformation résiduelle apparait. Ce fluage finit par désolidariser la poignée du corps. On préfère, pour éviter cet inconvénient, avoir recours au collage direct de la poignée sur le corps (par exemple avec des colles du type silicone). Mais, il n'est pas souhaitable de réaliser la poignée en polypropylène qui se colle difficilement et nécessite un traitement spécial. On doit choisir de préférence l'ABS qui n'est pas transparent aux micro-ondes si bien que, pour éviter l'échauffement, on doit réaliser une poignée de faible épaisseur donc fragile aux chocs. En outre, l'ABS est plus onéreux. De plus, le collage nécessite des surfaces de collage très propres et une importante durée d'immobilisation des pièces ce qui entraîne une gêne dans une fabrication en grande série et augmente le coût de la fabrication.

L'invention a pour but de remédier à ces inconvénients et, en particulier, de réaliser à moindre coût des moyens de fixation fiables et durables.

Selon l'invention, les moyens de fixation sont constitués par un ruban de cerclage qui est monté directement sur le corps et qui lie une partie de la poignée audit corps et qui est réalisé en un matériau composite ayant un coefficient de dilatation proche de celui du corps et résistant au fluage lors des cycles thermiques successifs.

Grâce à un tel choix judicieux du matériau, on obtient un ruban de cerclage qui assure un serrage durable de la poignée sur le corps. En effet, le matériau se dilate en même temps que le corps mais sans qu'il y ait fluage au bout de nombreux cycles thermiques.

Selon un mode de réalisation préféré de l'invention, le matériau du ruban de cerclage comporte une structure à base de fibres.

Ainsi l'utilisation de fibres permet, outre d'obtenir les qualités requises de serrage, de dilatation et tenue en température, d'éviter le fluage. De plus ces fibres sont d'un coût raisonnable ce qui est primordial pour une fabrication en grande série. Les fibres permettent un assemblage rapide, le procédé de fabrication étant automatisable.

Les caractéristiques et avantages de l'invention ressortiront d'ailleurs de la description qui va suivre, à titre d'exemple, en référence au dessin annexé dans lequel :

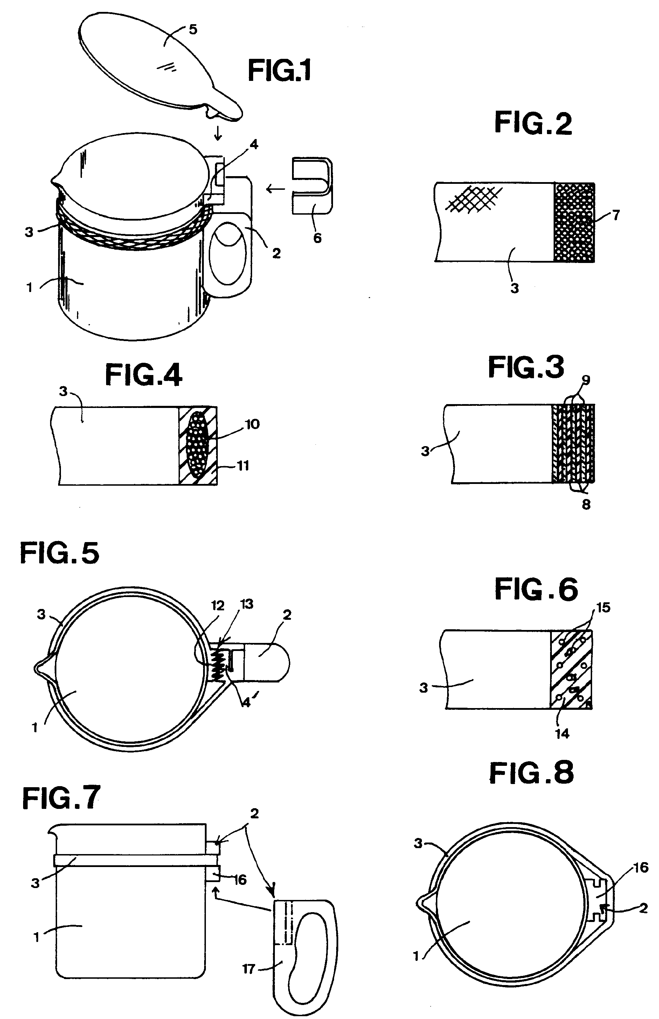

la figure 1 est une vue en perspective d'un récipient selon l'invention ; la figure 2 est une vue en coupe partielle d'un ruban de cerclage selon l'invention illustrant un réseau de fibres bobinées ; la figure 3 est une vue analogue à la figure 2 illustrant des feuilles de fibres enroulées en nappe ; la figure 4 est une vue analogue à la figure 2 illustrant une matière plastique surmoulée sur le réseau de fibres ; la figure 5 est une vue de dessus d'un récipient selon un autre mode de réalisation de l'invention dans laquelle le ruban de cerclage et la poignée sont moulés en une seule pièce ; la figure 6 est une vue analogue à la figure 2 illustrant une matière plastique chargée avec des fibres courtes ; la figure 7 est une vue en élévation d'un récipient selon un autre mode de réalisation de l'invention dans lequel la poignée est réalisée en deux parties ; la figure 8 est une vue de dessus de la figure 7, dans laquelle seule la partie de la poignée fixée au corps est représentée.

Le récipient verseur d'infusion représenté à la figure 1 comprend un corps 1 auquel est fixée une poignée 2 par des moyens de fixation 3. Pour pouvoir placer le récipient dans un four à micro-ondes, le corps 1 et la poignée 2 sont réalisés chacun dans un matériau transparent aux micro-ondes. Le corps 1 est par exemple en verre ou en céramique, la poignée 2 peut être soit en plastique, par exemple en polypropylène ou polycarbone, soit en matériau composite, par exemple en polypropylène chargé de fibres.

Selon l'invention , les moyens de fixation 3 comportent un ruban de cerclage qui lie une partie 4 de la poignée 2 audit corps 1 et qui est réalisé en un matériau ayant un coefficient de dilatation proche de celui du corps 1, transparent aux micro-ondes et résistant au fluage lors des cycles thermiques successifs. Un couvercle 5 et un cache-ruban 6 peuvent éventuellement être fixés sur la poignée 2.

Le matériau du ruban de cerclage 3 comporte une structure à base de fibres 7. Les fibres 7 sont de préférence du type fibres de verre ou de silice. En effet, les fibres 7, étant de nature semblable à celle du corps 1, possèdent les propriétés thermiques voisines de celui-ci et sont transparentes aux micro-ondes.

Les fibres 7 peuvent être utilisées seules, par exemple bobinées directement autour du corps 1 et une partie 4 de la poignée 2 de manière à constituer un réseau par exemple du type tresse.
Les fibres 7 peuvent aussi être utilisées en combinaison avec un autre produit, le matériau du ruban de cerclage étant alors un matériau composite.

Selon un mode de réalisation de l'invention, le matériau composite du ruban de cerclage 3 comporte un réseau de fibres maintenues entre elles par un liant du type résine ou colle, par exemple une colle du type de silicone adhérente au verre ou du type thermoformable (polypropylène) ou du type thermodur ( résine mono ou bi-composant) ou du type soluble dans un solvant (polyester sulfone).

Comme illustré sur la figure 2, le réseau de fibres peut se présenter sous forme d'une fibre 7 qui est enroulée directement autour du corps 1 et de la poignée 2 pour former une tresse.

Comme illustré sur la figure 3, le réseau de fibres peut aussi se présenter sous forme d'une bande mince ou d'une tresse aplatie 8 qui entoure le corps 1 et une partie 4 de la poignée 2 sur un ou plusieurs tours. On peut utiliser, par exemple, une tresse de fibre de verre enrobée d'un liant du type polyester sulfone enroulée en nappes successives autour de l'ensemble formé par le corps 1 et la poignée 2.

On va décrire maintenant deux procédés de fabrication d'un récipient selon l'invention, réalisés de façon entièrement automatique :

Selon un premier procédé, on bobine des fibres 7 directement autour du corps 1 et d'une partie 4 de la poignée 2 au moyen d'une bobineuse mécanique dont un dévidoir, d'une part, tourne autour de l'ensemble formé par le corps 1 et la poignée 2 et maintenu fixe et, d'autre part, effectue en même temps une légère translation de manière à bobiner autour dudit ensemble sur une certaine largeur.
Selon un autre procédé, on dispose l'ensemble formé par le corps 1 et la poignée 2 sur un plateau support qui tourne et simultanément effectue une légère translation devant un dévidoir fixe de fibres 7, de manière à entourer avec des fibres ledit ensemble sur une certaine largeur.

Pendant le bobinage, on peut imprégner les fibres de liant, par exemple à la sortie du dévidoir, ou bien on peut aussi recouvrir les fibres par une couche de liant au cours de la formation du ruban. Le liant doit être ensuite durci ou polymérisé par tout tout moyen connu en soi (air, température, catalyseur, ultra-violet, évaporation d'un solvant).

A la fin du bobinage, on fixe les extrémités des fibres sur la partie 4 de la poignée 2 au moyen d'une opération d'arrêt. L'opération d'arrêt pourra consister, par exemple, à souder les extrémités aux ultrasons, ou bien à chauffer le ruban sur toute sa longueur de façon à faire fondre le liant qui soude les fibres les unes avec les autres et en particulier les extrémités, puis à laisser durcir par refroidissement.

Pour des raisons d'esthétique, on peut aussi imprégner de colorant soit le liant, soit la fibre, ou bien incorporer une substance décorative.

Dans un autre mode de réalisation de l'invention illustré sur les figures 4 et 5, le matériau composite du ruban de cerclage 3 comporte une armature de fibres 10 autour de laquelle est moulée une matière plastique 11 du type thermodure ou thermofluide, par exemple une tresse de fibres de verre sur laquelle est surmoulée soit du polypropylène, soit du polysulfone, soit du sulfure de polyéthylène.

La poignée 2 et le ruban de cerclage 3 peuvent être avantageusement moulés en une même pièce, et l'extrémité 12 du ruban et ladite partie 4' de la poignée 2 comportent des moyens de tension et de verrouillage mutuels 13, par exemple des dents complémentaires sur la poignée 2 et le ruban 3.

Selon un autre mode de réalisation de l'invention illustré sur les figures 6, 7 et 8, le matériau composite du ruban de cerclage 3 est réalisé en une matière plastique 14 chargée en fibres courtes 15, par exemple, du polypropylène chargé de fibres minérales.
Dans l'exemple de la réalisation de la figure 7, la poignée 2 est démontable en au moins deux parties 16, 17, une partie 16 fixée au corps 1 et une partie 17 destinée à la préhension. Cette partie 16 peut dans certains cas être fabriquée dans un matériau présentant une certaine élasticité.
Le procédé de fabrication est alors très simple, on moule le ruban de cerclage 3 sous forme d'anneau, puis on le chauffe de manière qu'il se dilate. On le place ensuite autour de l'ensemble formé par le corps 1 et la partie 16 de la poignée 2, l'ensemble étant froid. Puis, on le laisse refroidir de manière que le ruban 3 serre ledit ensemble définitivement. On fixe alors la deuxième partie 17 de la poignée 2 sur la première 16 par emmanchement coulissant, par exemple en queue d'arronde.

## Revendications

1. Récipient verseur d'infusion adapté à être placé dans un four à micro-ondes et comprenant un corps (1) réalisé dans un matériau transparent aux micro-ondes, et une poignée (2) réalisée dans un matériau transparent aux micro-ondes et fixée au corps (1) par des moyens de fixation (3) transparents aux micro-ondes,
**caractérisé en ce que** les moyens de fixation sont constitués par un ruban de cerclage (3) qui est monté directement sur le corps (10) et qui lie une partie (4,16) de la poignée (2) audit corps (1) et qui est réalisé en un matériau composite ayant un coefficient de dilatation proche de celui du corps et résistant au fluage lors des cycles thermiques successifs.

2. Récipient selon la revendication 1,
**caractérisé en ce que** le matériau du ruban de cerclage (3) comporte une structure à base de fibres (7, 8, 10, 15).

3. Récipient selon revendication 1,
**caractérisé en ce que** le matériau composite du ruban de cerclage (3) comporte un réseau de fibres (7) maintenues entre elles par un liant (9) du type résine ou colle.

4. Récipient selon la revendication 3,
**caractérisé en ce que** le réseau de fibres se présente sous forme d'une bande mince ou d'une tresse aplatie (8) qui entoure le corps (1) et une partie (4) de la poignée (2) sur au moins un tour.

5. Récipient selon la revendication 1,
**caractérisé en ce que** le matériau composite du ruban de cerclage (3) est réalisé en une matière plastique (14) chargée en fibres courtes (15).

6. Récipient selon la revendicatin 1,
**caractérisé en ce que** le matériau composite du ruban de cerclage (3) comporte une armature de fibres (10) autour de laquelle est moulée une matière plastique (11).

7. Récipient selon la revendication 5 ou 6,
**caractérisé en ce que** la poignée (2) et le ruban de cerclage (3) sont moulés en une même pièce, et l'extrémité (12) du ruban (3) et la poignée (2) comportent des moyens de tension et de verrouillage mutuels (13).

8. Récipient selon l'une quelconque des revendications 2 à 7,
**caractérisé en ce que** les fibres (7, 8, 10, 15) sont du type fibres de verre.

9. Procédé de fabrication d'un récipient selon l'une quelconque des revendications 2 à 4,
**caractérisé en ce qu'** on bobine des fibres (7) directement autour du corps (1) et d'une partie (4) de la poignée (2) au moyen d'une bobineuse mécanique dont un dévidoir, d'une part, tourne autour de l'ensemble formé par le corps (1) et la poignée (2) et maintenu fixe et, d'autre part, effectue en même temps une légère translation de manière à bobiner autour dudit ensemble sur une certaine largeur, et on fixe les extrémités des fibres (7) sur la partie (4) de la poignée (2) au moyen d'une opération d'arrêt.

10. Procédé de fabrication d'un récipient selon l'une quelconque des revendications 2 à 4,
**caractérisé en ce qu'**on dispose l'ensemble formé par le corps (1) et la poignée (2) sur un plateau support qui tourne et simultanément effectue une légère translation devant un dévidoir fixe de fibres, de manière à entourer avec des fibres ledit ensemble sur une certaine largeur et on fixe les extrémités des fibres (7) sur la partie (4) de la poignée (2) au moyen d'une opération d'arrêt.

11. Procédé de fabrication d'un récipient selon la revendication 9 ou 10,
**caractérisé en ce que** pendant le bobinage, on imprègne les fibres de liant.

12. Procédé de fabrication d'un récipient selon l'une quelconque des revendications 9 à 11,
**caractérisé en ce qu'**on imprègne de colorant soit le liant, soit la fibre.

13. Procédé de fabrication d'un récipient selon l'une quelconque des revendications 1, 2 ou 5,
**caractérisé en ce que** l'on moule le ruban de cerclage (3) sous forme d'anneau, puis on le chauffe de manière qu'il se dilate, on le place ensuite autour de l'ensemble formé par le corps (1) et la partie (16) de la poignée (2), l'ensemble étant froid, puis on le laisse refroidir de manière que le ruban (3) serre ledit ensemble définitivement.

## Claims

1. An infusion pouring vessel adapted to be placed in a microwave oven and comprising a body (1) made from a material pervious to microwaves, and a handle (2) made in a material pervious to microwaves and attached to the body (1) by attachment means (3) which are pervious to microwaves,
**characterised in that** the attachment means are formed by a hoop (3) which is mounted directly on the body (10) and which joins a part (4, 16) of the handle (2) to said body (1) and which is made from a composite material having a coefficient of thermal expansion close to that of the body and creep-resistant during successive thermal cycles.

2. A vessel according to Claim 1,
**characterised in that** the material of the hoop (3) comprises a structure having a fibre base (7, 8, 10, 15).

3. A vessel according to Claim 1,
**characterised in that** the composite material of the hoop (3) comprises a network of fibres (7) interconnected by a bonding agent (9) of the resin or adhesive type.

4. A vessel according to Claim 1,
**characterised in that** the network of fibres is in the form of a thin strip or a flattened braid (8) which surrounds the body (1) and a part (4) of the handle (2) over at least one turn.

5. A vessel according to Claim 1,
**characterised in that** the composite material of the hoop (3) is made from a plastic material (14) charged with short fibres (15).

6. A vessel according to Claim 1,
**characterised in that** the composite material of the hoop (3) comprises a reinforcement of fibres (10) around which is moulded a plastic material (11).

7. A vessel according to Claim 5 or 6,
**characterised in that** the handle (2) and the hoop (3) are moulded from a single piece, and the end (12) of the hoop (3) and the handle (2) comprise mutual tensioning and locking means (13).

8. A vessel according to any one of Claims 2 to 7,
**characterised in that** the fibres (7, 8, 10, 15) are of the fibreglass type.

9. A manufacturing process for a vessel according to any one of Claims 2 to 4,
**characterised in that** fibres (7) are wound directly around the body (1) and one part (4) of the handle (2) by means of a mechanical winding device, a paying-out device of which firstly rotates around the unit formed by the body (1) and the handle (2) and held fast and secondly at the same time performs a slight translation so as to wind around said unit over a certain width, and the ends of the fibres (7) are fixed on to the part (4) of the handle (2) by means of a stopping operation.

10. A manufacturing process for a vessel according to any one of Claims 2 to 4,
**characterised in that** the unit formed by the body (1) and the handle (2) is placed on a support plate which rotates and simultaneously performs a slight translation in front of a paying-out device, so as to surround said unit with fibres over a certain width and the ends of the fibres (7) are fixed on the part (4) of the handle (2) by means of a stopping operation.

11. A manufacturing process for a vessel according to Claim 9 or 10,
**characterised in that** during winding the fibres are impregnated with bonding agent.

12. A manufacturing process for a vessel according to any one of Claims 9 to 11,
**characterised in that** either the bonding agent or the fibres is/are impregnated with colouring agent.

13. A manufacturing process for a vessel according to any one of Claims 1, 2 or 5,
**characterised in that** the hoop (3) is moulded in the shape of a ring, then it is heated so that it expands, it is then placed around the unit formed by the body (1) and the part (16) of the handle (2), while the unit is in the cold state, then it is left to cool so that the hoop (3) permanently clamps said unit.

## Patentansprüche

1. Aufgußkanne, die zum Einsetzen in einen Mikrowellenofen geeignet ist, mit einem Körper (1) aus einem für Mikrowellen durchlässigen Material und einem Handgriff (2) aus einem für Mikrowellen durchlässigen Material, der am Köper (1) durch für Mikrowellen durchlässige Befestigungsmittel (3) gehalten ist, **dadurch gekennzeichnet,** daß das Befestigungsmittel aus einem Spannband (3) besteht, das direkt auf dem Körper (1) montiert ist und einen Teil (4, 16) des Handgriffs (2) mit dem Körper (1) verbindet und aus einem Kompositmaterial hergestellt ist, das einen Ausdehnungskoeffizienten nahe bei dem des Körpers hat und bei aufeinanderfolgenden Wärmezyklen kriechfest ist.

2. Kanne nach Anspruch 1, **dadurch gekennzeichnet,** daß das Material des Spannbandes (3) eine Struktur auf der Grundlage von Fasern (7, 8, 10, 15) aufweist.

3. Kanne nach Anspruch 1, **dadurch gekennzeichnet,** daß das Kompositmaterial des Spannbandes (3) ein Netz von Fasern (7) aufweist, die untereinander durch ein Bindemittel (9) vom Typ Harz oder Klebstoff gehalten sind.

4. Kanne nach Anspruch 3, **dadurch gekennzeichnet,** daß das Netz von Fasern in Form eines dünnen Bandes oder einer flachen Litze (8) vorliegt, welche den Körper (1) und einen Teil (4) des Handgriffs (2) mit mindestens einer Windung umgeben.

5. Kanne nach Anspruch 1, **dadurch gekennzeichnet,** daß das Kompositmaterial des Spannbandes (3) aus einem mit kurzen Fasern (15) gefüllten Kunststoffmaterial (14) hergestellt ist.

6. Kanne nach Anspruch 1, **dadurch gekennzeichnet,** daß das Kompositmaterial des Spannbandes (3) eine Armierung von Fasern (10) aufweist, um welche ein Kunststoffmaterial (11) geformt ist.

7. Kanne nach Anspruch 5 oder 6, **dadurch gekennzeichnet,** daß der Handgriff (2) und das Spannband (3) einstückig geformt sind und das Ende (12) des Spannbandes (3) und der Handgriff (2) Vorrichtungen zum Spannen und zur gegenseitigen Verriegelung (13) aufweisen.

8. Kanne nach einem der Ansprüche 2 bis 7, **dadurch gekennzeich****net,** daß die Fasern (7, 8, 10, 15) vom Typ Glasfasern sind.

9. Verfahren zur Herstellung einer Kanne nach einem der Ansprüche 2 bis 4, **dadurch gekennzeichnet,** daß man Fasern (7) unmittelbar um den Körper (1) und einen Teil (4) des Handgriffs (2) mittels einer mechanischen Wickelvorrichtung wickelt, von der eine Abgabevorrichtung sich einerseits um die vom Körper (1) und dem Handgriff (2) gebildete und unbeweglich gehaltene Anordnung dreht, und andererseits gleichzeitig eine geringe Verschiebung bewirkt, um über eine gewisse Breite um die Anordung zu wickeln, und die Enden der Fasern (7) am Teil (4) des Handgriffs (2) mittels einer Befestigungsmaßnahme befestigt werden.

10. Verfahren zur Herstellung einer Kanne nach einem der Ansprüche 2 bis 4, **dadurch gekennzeichnet,** daß die vom Köper (1) und dem Handgriff (2) gebildete Anordnung auf einem Drehteller angeordnet wird, der sich vor einer unbeweglichen Faser-Abgabevorrichtung dreht und gleichzeitig eine leichte Verschiebungsbewegung durchführt, so daß die Anordnung über eine gewisse Breite mit den Fasern umwickelt wird, worauf die Enden der Fasern (7) auf dem Teil (4) des Handgriffs (2) mittels einer Befestigungsmaßnahme befestigt werden.

11. Verfahren zur Herstellung einer Kanne nach den Ansprüchen 9 oder 10, **dadurch gekennzeichnet,** daß die Fasern während des Umwickelns mit Bindemittel imprägniert werden.

12. Verfahren zur Herstellung einer Kanne nach einem der Ansprüche 9 bis 11, **dadurch gekennzeichnet,** daß entweder das Bindemittel oder die Faser mit Farbstoff imprägniert werden.

13. Verfahren zur Herstellung einer Kanne nach einem der Ansprüche 1, 2 oder 5, **dadurch gekennzeichnet,** daß das Spannband (3) in Form eines Ringes geformt wird, der erwärmt wird, damit er sich ausdehnt, worauf man ihn um die vom Körper (1) und dem Teil (16) des Handgriffs (2) gebildete Anordnung, die kalt ist, legt und abkühlen läßt, so daß das Spannband (3) die Anordnung endgültig zusammenspannt.
